(19) Europäisches Patentamt

European Patent Office

Office européen des brevets

(11) **EP 0 972 690 A2**

(12) **EUROPÄISCHE PATENTANMELDUNG**

(43) Veröffentlichungstag:
**19.01.2000 Patentblatt 2000/03**

(51) Int. Cl.[7]: **B60T 7/10**, B60T 11/04

(21) Anmeldenummer: **99110074.4**

(22) Anmeldetag: **22.05.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **26.06.1998 DE 19828468**

(71) Anmelder:
**Micro Compact Car smart GmbH**
**71272 Renningen (DE)**

(72) Erfinder: **Gausrab, Klaus**
**75365 Calw-Hirsau (DE)**

(74) Vertreter: **Weiss, Klaus et al**
**DaimlerChrysler AG,**
**Intellectual Property Management,**
**FTP - C 106**
**70546 Stuttgart (DE)**

(54) **Feststellbremse für Kraftfahrzeuge, Fahrzeuganhänger od. dgl.**

(57)   Eine Feststellbremse (1) für radbetriebene Fahrzeuge wie Kraftfahrzeuge, Fahrzeuganhänger od. dgl. weist ein Betätigungsorgan (4) auf, dessen Verstellkraft durch eine Übertragungseinrichtung (6) als Spannkraft auf eine Spannvorrichtung einer Radbremse übertragen wird. Die Übertragungseinrichtung enthält mindestens ein in Ausgangsstellung des Betätigungsor-gans mechanisch vorgespanntes Federelement (7). Das mindestens eine Federelement und die Spannvorrichtung wirken nach Art von hintereinandergeschalte-ten Federn einer Federschaltung beim Verstellen des Betätigungsorgans zwischen demselben und der Rad-bremse (2).

Fig. 1

EP 0 972 690 A2

**Beschreibung**

Die Erfindung betrifft eine Feststellbremse für radbetriebene Fahrzeuge wie Kraftfahrzeuge, Fahrzeuganhänger od. dgl. - nachfolgend kurz „Fahrzeug" - mit den Merkmalen des Oberbegriffs des Anspruches 1.

Aus WO 95 27 642 A1 und aus WO 97 26 163 A1 sind Feststellbremsen für Fahrzeuge bekannt. Diese Feststellbremsen sind mit einem Betätigungsorgan in Form eines Handbremshebels ausgestattet. Der Handbremshebel ist über eine Zugstange, ein Zugseil und weitere Bauteile einer Übertragungseinrichtung mit einer Radbremse gekoppelt. Dabei wird eine auf das Betätigungsorgan ausgeübte Verstellkraft als Spannkraft auf eine Spannvorrichtung der Radbremse übertragen. Bei Betätigung dieser Feststellbremsen ist es möglich, daß die Radbremsen ruckartig mit besonders hohen Kräften beaufschlagt werden, wodurch auch unverhältnismäßig hohe Bremsmomente erzeugt werden.

DE-OS 1 555 185 ist eine weitere Handbremsanordnung entnehmbar. Deren Übertragungseinrichtung enthält ein Federelement in Form eines Gummiblockes. Mittels dieses elastischen Zwischengliedes zwischen dem Handbremshebel und einer Bremsscheibe soll das Lösen des festgestellten Handbremshebels erleichtert werden.

Der Erfindung liegt die Aufgabe zugrunde, die Arbeitsweise einer Feststellbremse besser an die funktionalen Erfordernisse anzupassen.

Diese Aufgabe wird durch die Merkmalskombination des Anspruches 1 gelöst. Vorteilhafte und zweckmäßige Weiterbildungen der Erfindung ergeben sich aus den Unteransprüchen.

Erfindungsgemäß enthält die Übertragungseinrichtung mindestens ein Federelement, welches bereits in Ausgangsstellung des Betätigungsorgans mechanisch vorgespannt ist.

Hierbei sei erwähnt, daß mit der Ausgangsstellung die Ruhestellung (Lösestellung) gemeint ist, in der das Betätigungsorgan und somit die Feststellbremse nicht betätigt bzw. nicht festgestellt ist. In dieser Ausgangsstellung ist das Betätigungsorgan nicht arretiert, sondern gelöst oder z.B. vom Zahnbogen eines Rastgesperres entkoppelt. Bei betätigter Feststellbremse hingegen greift das Betätigungsorgan z.B. mittels einer Klinkensperre in den vorgenannten Zahnbogen ein.

Mittels dieses mindestens einen Federelements - nachfolgend kurz: „Federelement" - kann die erzielbare Bremskraft auf ein erforderliches Maß begrenzt werden. Hierzu sind das Federelement und die Spannvorrichtung nach Art von mechanisch hintereinandergeschalteten Federn angeordnet. Diese Hintereinanderschaltung ist bei Kraftübertragung zwischen Betätigungsorgan und Radbremse des Fahrzeugs oder Radfahrzeugs wirksam, wenn das Betätigungsorgan verstellt wird.

Mit anderen Worten lassen sich in einem Ersatzschaltbild das mechanisch vorgespannte Federelement und die Spannvorrichtung - ebenso wie weitere Bauteile im Kraftfluß von Betätigungsorgan zur Radbremse (z.B. Bremshebel, Bremsseilzug) - unabhängig von deren konstruktiv-technischer Ausgestaltung jeweils als Feder (z.B. als Zugfeder, Druckfeder) darstellen, welche mechanisch hintereinandergeschaltet eine Federschaltung bilden. An dieser Federschaltung greift nun das Betätigungsorgan mit einer Federkraft (z.B. mit einer Zugkraft) an. Sobald die angreifende Federkraft größer ist als die Vorspannkraft des vorgespannten Federelements, ergibt sich die Feder-Steifigkeit $c_{ges}$ der Federschaltung durch die Gleichung

$$1/c_{ges} = 1/c_1 + 1/c_2 \qquad (1),$$

wobei $c_1$ die Feder-Steifigkeit der Feststellbremse ohne das vorgespannte Federelement und $c_2$ die Feder-Steifigkeit dieses vorgespannten Federelements ist. Die Feder-Steifigkeit der Federschaltung wird deshalb mit Hilfe des Federelements bei höheren Verstellkräften reduziert. Dies hat den Vorteil, daß die Bremskraft nach Überwindung der Vorspannkraft des Federelements in geringerem Maße zunimmt, als dies ohne Verwendung des vorgespannten Federelements der Fall wäre. Hierdurch wird die Bremskraft im Bereich höherer Verstellkräfte begrenzt. Da die Federkennlinie von Feststellbremsen nach Anliegen der Bremsbeläge an den Bremsscheiben, Brenstrommeln od. dgl. im allgemeinen nur noch von der Eigenelastizität dieser Bremsbeläge und der weiteren Bauteile im Kraftfluß zwischen Radbremse und Betätigungsorgan bestimmt wird und daher progressiv ist, kann sie erfindungsgemäß durch Einbau des Federelements technisch einfach weniger progressiv gestaltet werden. Die Bauteile der Feststellbremse werden verbessert vor unnötiger Überbeanspruchung geschützt, was deren Lebensdauer erhöht. Außerdem werden ruckartige Bremsvorgänge vermieden, was die Bedienung der Feststellbremse komfortabler gestaltet.

Zweckmäßig ist die Vorspannkraft des Federelements derart dimensioniert, daß die vorgenannte Begrenzung der Bremskraft erst oberhalb einer vorbestimmten Schwelle einsetzt. Vorzugsweise ist die Vorspannkraft derart eingestellt, daß bei der Schwelle die unbedingt notwendigen Bremskräfte bzw. Haltemomente am 30%-Hang erzeugt werden. Im normalen Arbeitsbereich des Betätigungsorgans (= unterhalb der Schwelle) findet keine Bremskraftbegrenzung durch das vorgespannte Federelement statt. Die erfindungsgemäße Feststellbremse unterscheidet sich dann prinzipiell erst oberhalb der Schwelle von einer herkömmlichen Feststellbremse. Durch Festlegung der Schwelle bzw. der Vorspannkraft läßt sich die Feststellbremse ohne zusätzliche konstruktive Änderungen an den jeweiligen Anwendungsfall anpassen.

Durch entsprechende Dimensionierung der Bauteile in der Feststellbremse kann die Vorspannung des Federelements gestuft verändert werden. In einer vorteilhaften Ausgestaltung ist die Vorspannung variabel und/oder stufenlos einstellbar. Zur Einstellung können die das Federelement fixierenden Bauteile mit geeigneten Stellmitteln ausgestattet sein. Diese Stellmittel können in einer bevorzugten Ausführungsform derart ausgebildet sein, daß die Vorspannkraft von einem Maximalwert bis zu einem Wert „Null" variierbar ist.

Das Betätigungsorgan ist z.B. als Hand- oder Fußbremshebel ausgebildet. Die Verstellkraft kann mechanisch, hydraulisch, elektrisch oder auf andere Weise erzeugt werden.

Die Erfindung hat im Falle einer Beaufschlagung des Betätigungsorgans durch Muskelkraft außerdem den Vorteil, daß der Bremsvorgang für den Fahrer besonders komfortabel wird. Die nach Überwindung der Vorspannkraft „abgeflachte" Federkennlinie führt zu einer besseren Auflösung der aufgebrachten Verstellkraft über den Verstellweg hinweg, da der Kraftunterschied zwischen zwei benachbarten Verstellweg-Abschnitten (z.B. zwei benachbarte Rasten bei der Klinkensperre eines Handbremshebels) geringer ist. Dies erleichtert beispielsweise in ungünstiger Situation am Hang eine Arretierung, z.B. eine Verrastung in der nächsthöheren Raste, des Handbremshebels auch für weniger kräftige Fahrer. Es wird auch das bei herkömmlichen Feststellbremsen existierende Problem reduziert, daß ein kräftiger Fahrer aufgrund eines dort vorhandenen großen Kraftsprungs zwischen zwei Rasten eine Rastierung zieht, die ein nachfolgender, schwächerer Fahrer dann nur noch mit Mühe lösen kann.

In einer bevorzugten Ausführungsform enthält die Feststellbremse Begrenzungsmittel, welche derart ausgelegt sind, daß sie als mechanischer Anschlag den Verstellweg und damit das maximal mögliche Bremsmoment beim Verstellen des Betätigungsorgans auf einen sinnvollen Wert begrenzen, d.h. der Federweg der Federschaltung ist künstlich begrenzt. Die Feststellbremse ist dadurch verbessert gegen übergroße Beanspruchungen geschützt.

Vorzugsweise sind die Begrenzungsmittel derart ausgebildet, daß der Federweg oberhalb der Vorspannkraft - also in einem zweiten Arbeitsbereich - höchstens so groß ist wie der größtmögliche Federweg des Federelements. Hierdurch werden die erzielbaren Bremsmomente noch wirksamer begrenzt. Die erwünschte höhere Elastizität der Feststellbremse im zweiten Arbeitsbereich ist durchgängig gewährleistet.

Um die Federschaltung raumsparend anordnen zu können, ist das Federelement vorzugsweise als Druckfeder ausgebildet. Im zweiten Arbeitsbereich wird die vorgespannte Druckfeder dann weiter komprimiert.

Vorteilhaft ist das Federelement bzw. sind die Federelemente als Elastomerkörper ausgestaltet. Dieses Federelement weist ein besonders geringes Gewicht auf und fördert einen kompakten Aufbau der Feststellbremse im Bereich des Federelements. In einer zusätzlichen Funktion wirkt die Elastomerfeder außerdem als mechanischer und/oder akustischer Dämpfer. Ohne Mehraufwand werden deshalb Vibrationen der Feststellbremse bedämpft. Darüber hinaus ermöglicht die Elastomerfeder aufgrund ihrer Werkstoffeigenschaften einen harmonischen Kennlinienverlauf der Feststellbremse, insbesondere im Übergangsbereich zwischen dem ersten Arbeitsbereich und dem zweiten Arbeitsbereich. Dies wiederum erhöht den Betätigungskomfort für den Fahrer.

Um die Vorspannung des als Druckfeder ausgebildeten Federelements zu realisieren, sind vorzugsweise zwei miteinander korrespondierende Klemmlager vorgesehen, welche in Vorspannrichtung des Federelements gegeneinander relativbeweglich sind und die beiden Wirkenden des Federelements flankieren. Das Federelement stützt sich an den Klemmlagern unmittelbar oder unter Zwischenlage weiterer Bauteile mittelbar ab. Hierdurch entsteht eine stabile, schraubstockartige Klemmfixierung der Druckfeder.

Bei herkömmlichen Konstruktionen von Feststellbremsen ist das Betätigungsorgan oftmals über ein als Zugstange oder als schwenkbarer Hebel ausgebildetes Kopplungsorgan mit einem Ausgleichbügel beweglich verbunden. Um eine möglichst große Anzahl herkömmlicher Bauteile für den Aufbau der erfindungsgemäßen Feststellbremse verwenden zu können, ist das Kopplungsorgan vorteilhaft als Zugstange ausgestaltet und vorzugsweise an das erste Klemmlager angelenkt. Im Sinne einer einfachen Kraftübertragung wird dann beim Verstellen des Betätigungsorgans aus seiner Ausgangsstellung heraus das erste Klemmlager von dem Kopplungsorgan beaufschlagt und automatisch das Federelement nach Überwinden der Vorspannkraft weiter komprimiert.

Um während der Verstellung des Betätigungsorgans eine stabile Bewegungsführung der Klemmlager gegeneinander zu erzielen, ist das eine Klemmlager (= erstes Klemmlager) vorzugsweise mit einem Führungskörper fest verbunden, der an dem anderen Klemmlager (= zweiten Klemmlager) beweglich gelagert ist. In einer zusätzlichen Funktion ist der Führungskörper vorzugsweise derart ausgebildet, daß er mit dem Kopplungsorgan beweglich verbunden ist und hierdurch die Anlenkung zwischen Kopplungsorgan und erstem Klemmlager gewährleistet. In einer weiteren vorteilhaften Ausführung trägt der Führungskörper zur Fixierung und Bewegungsführung des Federelements bei und weist hierzu insbesondere einen zylindrischen Außenmantel mit in Vorspannrichtung verlaufender Zylinderachse auf, so daß der Aufnahmekörper das Federelement nach Art eines Zentrierdorns aufnehmen kann.

Ein raumsparender Aufbau der Übertragungseinrichtung wird vorteilhaft dadurch unterstützt, daß das Kopplungsorgan stangenförmig ausgebildet ist und einen Hohlraum des Führungskörpers durchsetzt. In diesem Fall ist eine konstruktiv einfache Anlenkung zwischen Kopplungsorgan und Führungskörper bzw. erstem Klemmlager gegeben, wenn das Kopplungsorgan mit einem an seinem Umfangsmantel angeordneten Lagervorsprung einen im Führungskörper-Hohlraum einliegenden Lagersteg flankiert.

Vorzugsweise ist zur beweglichen Lagerung des Führungskörpers das zweite Klemmlager in Vorspannrichtung des Federelements von einer Auffnahmeöffnung durchbrochen. Der Führungskörper ist in diese Auffnahmeöffnung beweglich eingesetzt. Insbesondere ist der Führungskörper etwa bündig mit ausreichend Bewegungsspiel vom Lochrand der Aufnahmeöffnung umgeben. Hierdurch gewährleistet die Aufnahmeöffnung auf technisch einfache Weise eine reine Translationsbewegung des ersten Klemmlagers gegenüber dem zweiten Klemmlager und somit eine kontrollierte Verformung des Federelements während des Betriebs der Feststellbremse. Außerdem kann die Aufnahmeöffnung als Fixierhilfe die Montage des Führungskörpers erleichtern. Um eine definierte Bewegungsführung des Führungskörpers zu erleichtern, ist der Umfangsmantel des Führungskörpers von einem Führungsansatz mit Bewegungsspiel flankiert. Dieser Führungsansatz ist mit dem zweiten Klemmlager bzw. mit dem Lochrand der Aufnahmeöffnung fest verbunden, z.B. einstückig verbunden. Es können Mittel vorgesehen sein, um einen Materialverschleiß durch Reibung zwischen Aufnahmeöffnung, Führungsansatz und Führungskörper zu reduzieren. Hierzu kann die Oberfläche des Führungsansatzes mit einem besonderen Werkstoff beschichtet sein.

Die erwünschte Vorspannung der Druckfeder wird technisch einfach realisiert, indem die beiden Klemmlager in Ausgangsstellung der Feststellbremse vorzugsweise durch Sicherungsmittel in einem vorbestimmten größten Abstand zueinander gehalten werden. Die beiden Klemmlager sind durch die Sicherungsmittel gegen eine Bewegung über diesen größten Abstand hinaus gewissermaßen arretiert.

Zweckmäßig sind die Sicherungsmittel mit einem Klemmlager oder beiden Klemmlagern und/oder mit dem Führungskörper verbunden. Dies unterstützt eine stabile Relativlage der beiden Klemmlager zueinander.

Vorteilhaft sind die Sicherungsmittel als mindestens ein am Führungskörper angeordneter, quer zur Vorspannrichtung des Federelements verlaufender Steg ausgebildet, der in Ausgangsstellung des Betätigungsorgans an der dem ersten Klemmlager abgewandten Seite des zweiten Klemmlagers anliegt und entweder als separates Bauteil am Führungskörper fixiert ist oder mit dem Führungskörper einstückig verbunden ist. Ein ausreichender Anlagedruck wird dabei ohne zusätzliche Bauteile automatisch mittels der Druckkraft des Federelements erzeugt. Der Steg kann sich z.B. kranzartig oder ringförmig um den Außenmantel des Führungskörpers erstrecken oder in seiner Umfangsrichtung unterbrochen sein.

Vorzugsweise enthalten die Sicherungsmittel einen federelastischen, radial spreizbaren Sicherungsring, der den Umfangsmantel des Führungskörpers radial umgibt. Die Montage des Führungskörpers, des Federelements und des ersten Klemmlagers vereinfacht sich dadurch zusätzlich. Der Führungskörper wird einfach durch die Aufnahmeöffnung hindurchgeschoben. Während der Sicherungsring die Aufnahmeöffnung passiert, befindet er sich in einer nach innen gespreizten Stellung. Sobald der Sicherungsring die Aufnahmeöffnung passiert hat, hintergreift er automatisch den dem ersten Klemmlager abgewandten Öffnungsrand der Aufnahmeöffnung.

In einer bevorzugten Ausführungsform ist das Betätigungsorgan mittels der Übertragungseinrichtung (z.B. mittels Gestänge oder Seilzügen) mit zwei Radbremsen gekoppelt. In diesem Fall ist es von Vorteil, daß beide Radbremsen gemeinsam über dasselbe Federelement mit dem Betätigungsorgan gekoppelt sind, so daß auf separate Federelemente für jede der beiden Radbremsen verzichtet werden kann. Hierzu muß das Federelement nur hinsichtlich seiner Federkennlinie und der Vorspannkraft entsprechend dimensioniert sein. Diese Variante unterstützt den raumsparenden Aufbau der erfindungsgemäßen Feststellbremse und deren montagetechnisch einfachen Aufbau.

Es ist von Vorteil, daß die Feststellbremse zur Kraftübertragung zwischen Betätigungsorgan und den beiden Radbremsen zwei Bremsseilzüge als Zugmittel aufweist, welche mit demselben Federelement gekoppelt sind. In diesem Fall ist ein robuster Aufbau der Feststellbremse und eine einfache Kraftübertragung gegeben.

Vorzugsweise erfolgt ein Bremsausgleich zwischen den beiden Rädern einer Achse unter Zuhilfenahme eines mit dem Betätigungsorgan beweglich verbundenen Ausgleichbügels, an dem die beiden Zugmittel bzw. Bremsseilzüge verankert sind. Dabei wirkt der Ausgleichbügel als mechanisch stabiler Träger für das zweite Klemmlager, indem er das zweite Klemmlager auf geeignete Weise fixiert, z.B. mit dem zweiten Klemmlager fest verbunden ist. Insbesondere bildet der Ausgleichbügel selbst in einer zusätzlichen Funktion das zweite Klemmlager. Hierzu eignet sich ein etwa quer zur Zugrichtung verlaufender Bügelabschnitt des Ausgleichbügels. Diese Zusatzfunktion des Ausgleichbügels senkt den Bauteileaufwand und somit auch die Montage- und Herstellungskosten der erfindungsgemäßen Feststellbremse.

Vorzugsweise sind das Federelement bzw. die Federelemente, die beiden Klemmlager, ggfs. der Ausgleichbügel und ggfs. der Führungskörper in Ausgangsstellung des Betätigungsorgans etwa konzentrisch zur Mittellängsachse des Kopplungsorgans angeordnet, wodurch der kompakte und raumsparende Aufbau der Feststellbremse weiter unterstützt wird.

Der Erfindungsgegenstand wird anhand der in den Figuren dargestellten Ausführungsbeispiele näher erläutert. Es zeigen:

Fig. 1 eine schematische Darstellung der erfindungsgemäßen Feststellbremse und eines dazugehörigen Bremskreises für zwei Räder einer Achse,

Fig. 2 eine schematische Darstellung von Federkennlinten einer Feststellbremse mit und ohne vorgespanntem Federelement,

Fig. 3 eine vergrößerte, teilweise geschnittene Darstellung etwa des Details III in einer ersten Ausführungsform,

Fig. 4 eine vergrößerte, teilweise geschnittene Darstellung etwa des Details III in einer zweiten Ausführungsform,

Fig. 5 eine perspektivische Darstellung der Baugruppe gemäß Fig.4,

Fig. 6 eine vergrößerte, teilweise geschnittene Darstellung etwa des Details III in einer dritten Ausführungsform,

Fig. 7 die Seitenansicht des gesamten Ausgleichbügels in Pfeilrichtung VII von Fig. 6,

Fig. 8 die Seitenansicht der in der Baugruppe gemäß Fig. 6 enthaltenen Stützscheibe in Pfeilrichtung VIII,

Fig. 9 die ungeschnittene Seitenansicht der Baugruppe gemäß Fig. 6, jedoch ohne Bremsseilzüge,

Fig. 10 eine perspektivische Darstellung der Baugruppe gemäß Fig. 9, jedoch ohne Zugstange,

Fig. 11 eine geschnittene Voransicht der Bau-gruppe gemäß Fig. 9 entsprechend der Schnittlinie XI-XI und

Fig. 12 eine Seitenansicht des Ausgleichbügels gemäß Fig. 9 in Pfeilrichtung XII.

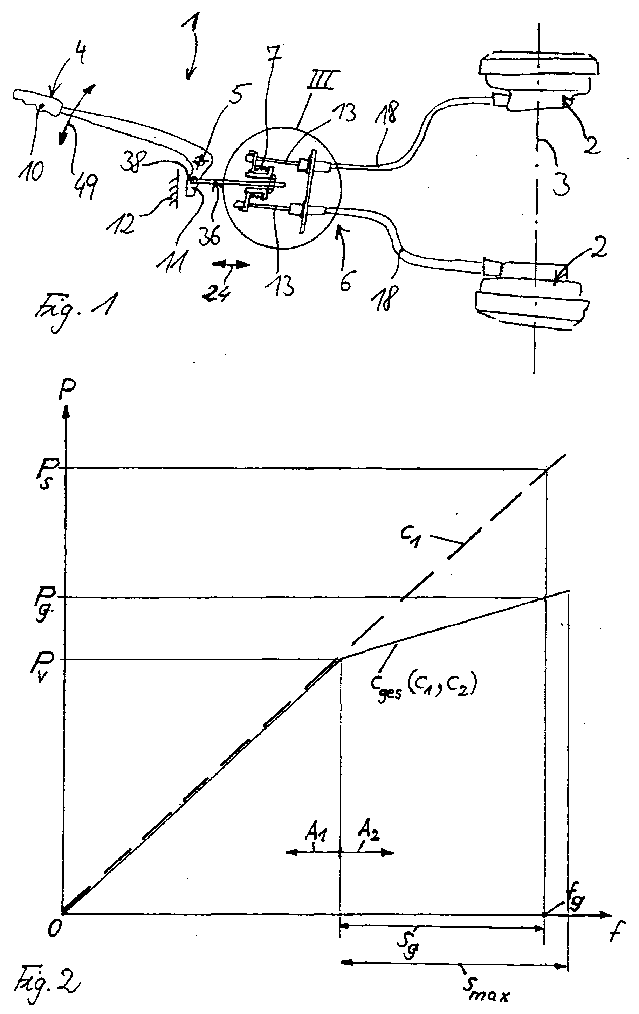

Die in Fig.1 dargestellte Feststellbremse 1 weist einen Bremskreis mit zwei Trommelbremsen 2 als Radbremsen auf. Mittels dieser Trommelbremsen 2 wirkt ein Betätigungsorgen der Feststellbremse 1 auf zwei Räder derselben Fahrzeugachse 3 eines Fahrzeuges ein. Das Betätigungsorgan in Form eines schwenkbaren Handbremshebels 4 ist an der Karosserie des Fahrzeugs mittels eines Schwenklagers 5 schwenkgelagert. Die manuell am Handbremshebel 4 erzeugte Verstellkraft wird auf eine im einzelnen nicht dargestellte Spannvorrichtung und ein Rückstellorgan (z.B. Rückholfeder)der Trommelbremsen 2 übertragen. Zur Kraftübertragung ist der Handbremshebel 4 durch eine das Detail III enthaltende Übertragungseinrichtung 6 mit den Trommelbremsen 2 gekoppelt.

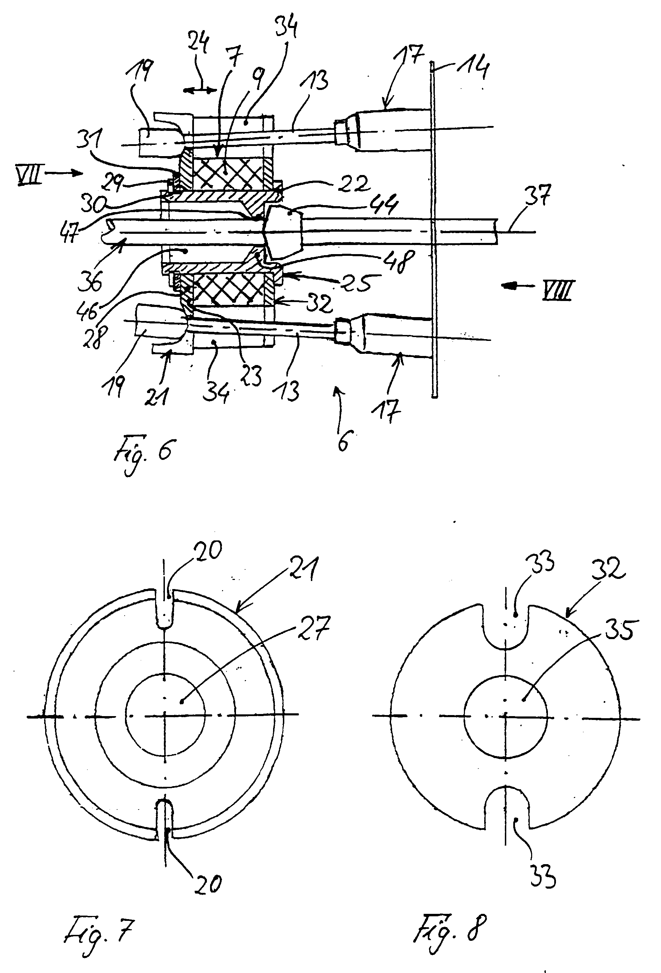

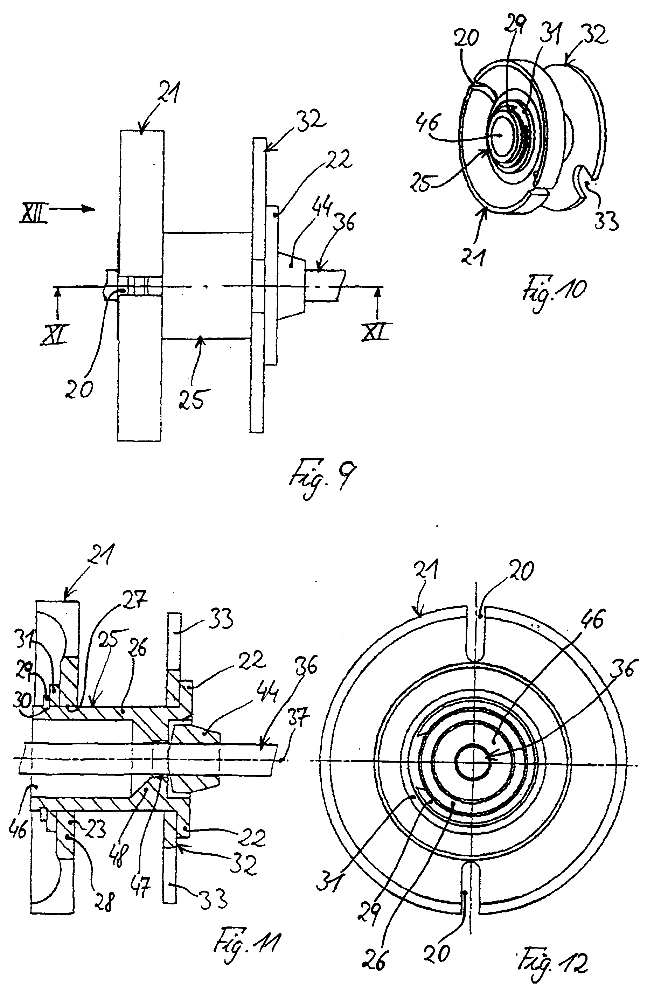

Die Übertragungseinrichtung 6 enthält ein mechanisch vorgespanntes Federelement 7 in Form einer Druckfeder, welche in den Ausführungsformen gemäß Fig.1 und Fig.3 bis Fig.5 als Schraubenfeder 8 und in dem Ausführungsbeispiel gemäß Fig.6 als Elastomerkärper 9 ausgebildet ist. Das Federelement 7 und die Spannvorrichtung sind mechanisch miteinander derart gekoppelt, daß sie im Ersatzschaltbild zwei hintereinandergeschaltete Federn einer Federschaltung bilden. Diese Federschaltung bewirkt beim Verstellen des Handbremshebels 4 in Schwenkrichtung 49 die Kraftübertragung zwischen diesem Handbremshebel 4 und den Trommelbremsen 2.

Zwar ist in den Ausführungsbeispielen nur ein einziges vorgespanntes Federelement 7 vorgesehen. In weiteren, hier nicht dargestellten Ausführungsbeispielen ist dieses Federelement 7 jedoch durch ein Gebilde mit mehreren Federelementen ersetzt. Dabei kann es sich z.B. um mehrere Zug- und/oder Druckfedern handeln.

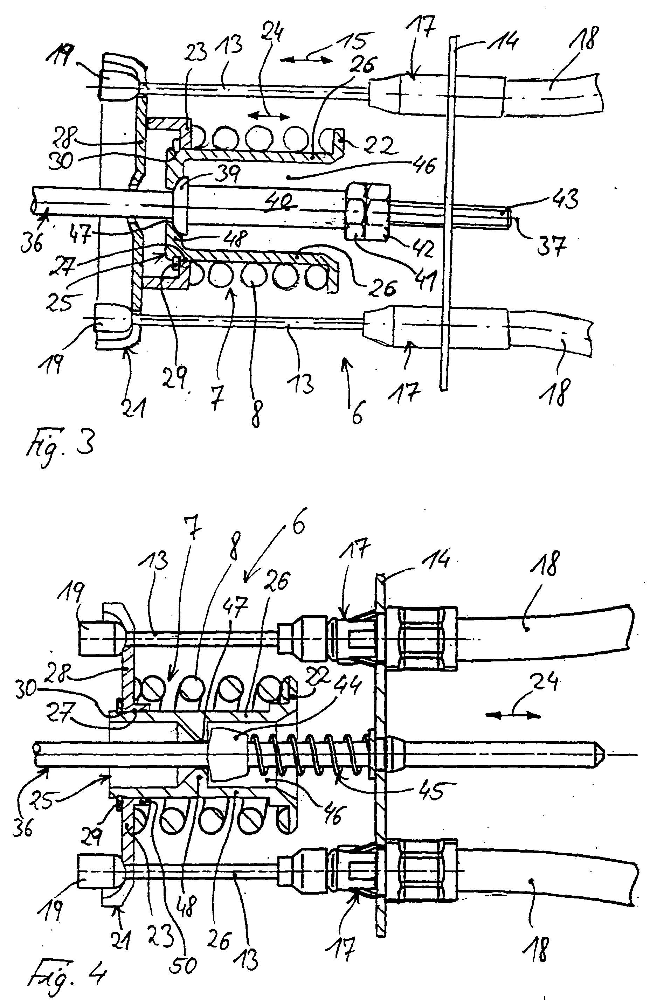

Anhand von Fig.2 sei die Wirkungsweise des vorgespannten Federelements 7 erläutert. Die Feststellbremse ohne Federelement 7 ist durch die Feder-Steifigkeit $c_1$ und das Federelement 7 durch die Feder-Steifigkeit $c_2$ charakterisiert, wobei $c_1$ und $c_2$ zur einfa-cheren Darstellung des Prinzips der erfindungsgemäßen Feststellbremse als konstant angenommen worden sind. In der Praxis sind die Kennlinienverläufe hingegen oftmals nichtlinear. So ist die der Feder-Stei-figkeit $c_1$ zugeordnete Kennlinie in der Regel progressiv. Die Ursache hierfür liegt in der Eigenelastizität der im Kraftfluß zwischen Betätigungsorgan und Radbremsen angeordneten Bauteile (z.B. Handbremshebel, Brems-seile, Bremsbeläge, Spannvorrichtung) nach Überwin-den der Leerwege und gegebenenfalls der Rückstellkraft eines Rückstellorgans (z.B. Rückholfeder) der Radbremse 2 beim Betätigen der Feststellbremse. Diese unerwünschte Progressivität wird mit Hilfe des Federelements 7 reduziert.

Die Vorspannung des Federelements 7 ist als Vorspannkraft $P_v$ an der P(= Federkraft)-Achse aufgetragen. Die Federkennlinie einer herkömmlichen Feststellbremse ohne Federelement 7 ist gestrichelt, die Federkennlinie der erfindungsgemäßen Feststellbremse 1 in Vollinie dargestellt. Die Vorspannkraft $P_v$ teilt die Federkennlinie der Feststellbremse 1 in zwei Arbeitsbereiche ein. Der erste Arbeitsbereich $A_1$ enthält die Federkräfte unterhalb der Vorspannkraft $P_v$ und der zweite Arbeitsbereich $A_2$ entspricht Federkräften ober-halb der Vorspannkraft $P_v$.

Solange die Vorspannkraft $P_v$ des Federele-ments 7 nicht überwunden ist, hat das Federelement 7 keinen Einfluß auf die Federkennlinie der Feststellbremse 1. Im zweiten Arbeitsbereich $A_2$ ist die Federkennlinie vom Federelement 7 abhängig. Nach entsprechender Umformung der Gleichung (1) ergibt sich im zweiten Arbeitsbereich $A_2$ die Feder-Steifigkeit zu

$$c_{ges} = c_1 / (c_1 / c_2 + 1) \qquad (2).$$

Aus Gleichung (2) ist ersichtlich, daß $c_{ges}$ kleiner ist als $c_1$, was einer „abgeflachten" Federkennlinie im zweiten Arbeitsbereich $A_2$ entspricht. Mittels des Federelements 7 wird also die Elastizität der Feststellbremse 1 im zweiten Arbeitsbereich $A_2$ künstlich erhöht, während sich die Wirkungsweise der Feststellbremse 1 im ersten Arbeitsbereich $A_1$ - er entspricht beispielsweise einem normalen Betätigungsbereich unterhalb der notwendigen Haltemomente am 30%-Hang - nicht von einer herkömmlichen Feststellbremse unterscheidet. Im normalen Betätigungsbereich der Feststellbremse 1 wird deshalb vorteilhaft keine Erhöhung der Elastizität und somit keine Verlängerung des Verstellweges des Handbremshebels 4 zur Erzielung einer bestimmten Haltekraft erzeugt. Dies vermeidet im ersten Arbeitsbereich $A_1$ Leerwege und überlange Verstellwege, welche vom Fahrer als alt und verschlissen empfunden werden. Oberhalb des normalen Betätigungsbereiches, also im zweiten Arbeitsbereich $A_2$, erfolgt durch die „abgeflachte" Federkennlinie automatisch eine Begrenzung der Federkraft P und somit der Bremskraft bzw. des Bremsmomentes: während bei einer Feststellbremse ohne Federelement 7 z.B. die Federkraft $P_s$ erreicht wird, wird mit dem Federelement 7 bei gleichem Verstellweg des Handbremshebels 4 nur die kleinere Federkraft $P_g$ erzielt. Dadurch kann die letzte Rastierung eines verrastbaren Handbremshebels 4 mit vergleichsweise niedrigen Handkräften erreicht werden. Die Feder-Steifigkeit $c_2$ des Federelements 7 und die Vorspannkraft $P_v$ bestimmen die Steilheit der Federkennlinie und somit auch den Kraftendwert in der letzten Rastierung. Durch Auswahl eines geeigneten Federelements 7 und Festlegung der Vorspannkraft $P_v$ kann die Federkennlinie der Feststellbremse 1 technisch einfach an eine gewünschte Anwendung angepaßt werden.

Zur Begrenzung des möglichen Bremsmomentes sind außerdem Begrenzungsmittel vorgesehen, welche den Verstellweg des Handbremshebels 4 begrenzen. Hierzu ist der Handbremshebel 4 zweiarmig ausgebildet. Ein längerer Hebelarm trägt einen Handgriff 10, während der gegenüber dem ersten Hebelarm etwa um 90° abgewinkelte kürzere Hebelarm 11 einen Begrenzungsanschlag bildet und mit einem fahrzeugfesten bzw. karosseriefesten Anschlag 12 korrespondiert. Diese Begrenzungsmittel 11,12 sind vorzugsweise konstruktiv derart dimensioniert, daß der Verstellweg des Handbremshebels 4 spätestens dann begrenzt ist, wenn der größtmögliche Federweg $s_{max}$ des Federelements 7 entlang der f (= Federweg)-Achse überwunden ist. Auf diese Weise wird die erhöhte Elastizität der Feststellbremse 1 entlang des gesamten zweiten Arbeitsbereichs $A_2$ aufrechterhalten. In Fig.2 ist der maximale Verstellweg des Handbremshebels 4 bereits nach Überwinden des Federweges $s_g$ des Federelements 7 erreicht. Hierdurch entsteht eine maximale Federkraft $P_g$ und eine entsprechende maximale Bremskraft.

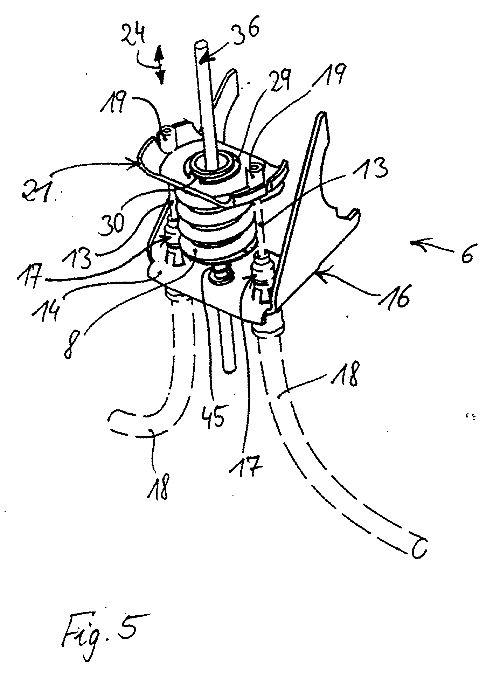

Der Handbremshebel 4 ist über ein einziges Federelement 7 mit Zugmitteln in Form von zwei Seilzügen 13 für jeweils eine Trommelbremse 2 gekoppelt. Wie Fig.3, Fig.4 und Fig.5 deutlich entnehmbar ist, sind die Seilzüge 13 an einer Stützplatte 14 in Seillängsrichtung 15 beweglich gelagert. Die Lagerplatte 14 ist Bestandteil einer im Querschnitt U-förmigen und der Einfachheit halber nur in Fig.5 dargestellten fahrzeugfesten Lagerarmatur 16. Die Lagerplatte 14 verbindet die beiden U-Schenkel der Lagerarmatur 16 einstückig miteinander. Jeder Seilzug 13 ist im Bereich der Lagerlatte 14 von einer Anschlußkappe 17 umgeben, welche die Lagerplatte 14 quer zu deren Plattenebene durchsetzt. Auf der dem Federelement 7 in Seillängsrichtung 15 abgewandten Seite der Lagerplatte 14 schließt sich an die Anschlußkappe 17 ein Seilzugschlauch 18 an, der den Seilzug 13 als Bewegungsführung und mechanischer Schutz umgibt. Die dem Handbremshebel 4 zugewandten Längsenden der Seilzüge 13 tragen jeweils einen Seilnippel 19. Die Seilnippel 19 hintergreifen jeweils eine Ankernut 20 (siehe Fig.7), welche im radial äußeren Bereich eines Ausgleichbügels 21 angeordnet sind. Hierdurch sind die Seilzüge 13 im Ausgleichbügel 21 verankert.

Die Übertragungseinrichtung 6 enthält zwei miteinander korrespondierende Klemmlager 22,23, welche das Federelement 7 in Richtung dessen Vorspannkraft zwischen sich nach Art von zwei Klemmbacken fixieren. Dabei verläuft die Vorspannrichtung 24 des Federelements 7 etwa parallel zur Seillängsrichtung 15 der benachbarten Seilzugabschnitte. Die beiden Klemmlager 22,23 sind in Vorspannrichtung 24 zueinander relativbeweglich gelagert.

In Fig.3 ist das erste Klemmlager 22 an einem im wesentlichen zylindrischen Führungskörper 25 einstückig angeformt. Dessen Zylinderachse verläuft parallel zur Vorspannrichtung 24. Das erste Klemmlager 22 ist an dem dem zweiten Klemmlager 23 in Vorspannrichtung 24 abgewandten Ende des Umfangsmantels 26 des Führungskörpers 25 angeordnet und ragt quer zum Umfangsmantel 26 über den Führungskörper 25 hinaus. Dabei ist das erste Klemmlager 22 in Umfangsrichtung des Führungskörpers 25 vorzugsweise nach Art einer Ringscheibe in sich geschlossen und stützt dadurch das ihm zugewandte Wirkende der Schraubenfeder 8 gleichmäßig ab. Zu seiner Bewegungsführung in Vorspannrichtung 24 ist der Führungskörper 25 an dem zweiten Klemmlager 23 beweglich gelagert. Hierzu durchsetzt der Führungskörper 25 etwa bündig und mit ausreichend Bewegungsspiel eine zentrale Aufnahmeöffnung 27 des zweiten Klemmlagers 23. Die Aufnahmeöffnung 27 durchsetzt ein die U-Schenkel verbindendes Verbindungsjoch des im Querschnitt U-förmigen zweiten Klemmlagers 23. Die Freienden der in Vorspannrichtung 24 verlaufenden U-Schenkel des zweiten Klemmlagers 23 stützen sich entweder an einem quer zur Vorspannrichtung 24 angeordneten Bügelabschnitt 28 des Ausgleichbügels 21 ab oder sind mit dem Bügelabschnittt 28 fest verbunden.

Neben seiner Funktion zur Bewegungsführung des ersten Klemmlagers 22 schafft der Führungskörper 25 gleichzeitig eine Fixierung und Bewegungsführung des Federelements 7. Zu diesem Zweck umgeben die Federwindungen der Schraubenfeder 8 bzw. umgibt der Elastomerkörper 9 den Umfangsmantel 26 etwa bündig (Fig.3, Fig.6) oder mit geringem Radialabstand (Fig.4).

Der dem ersten Klemmlager 22 axial gegenüberliegende Endbereich des Führungskörpers 25 trägt als federelastischer Sicherungsring 29 ausgebildete axiale Sicherungsmittel, welche in Vorspannrichtung 24 bzw. axial wirksam sind und in Ausgangsstellung des Handbremshebels 4 nur eine einseitige Beweglichkeit des ersten Klemmlagers 22 in Richtung des zweiten Klemmlagers 23 zulassen, d.h. die Vorspannung des Federelements 7 und somit ein vorbestimmter größter Abstand zwischen beiden Klemmlagern 22,23 wird in Ausgangsstellung des Handbremshebels 4 zuverlässig aufrechterhalten. Der Sicherungsring 29 umgibt den Führungskörper 25 radial und liegt dabei in einer Ringnut 30 des Führungskörpers 25 ein. Im Querschnitt gemäß Fig.3, Fig.4, Fig.6 und Fig.11 verläuft der Sicherungsring 29 quer zur Vorspannrichtung 24 und ist auf der dem ersten Klemmlager 22 abgewandten Seite des zweiten Klemmlagers 23 angeordnet. Aufgrund der Druckkraft des Federelements 7 liegt der Sicherungsring 29 in Ausgangsstellung des Handbremshebels 4 z.B. unmittelbar an dem U-förmigen Klemmlager 23 an (Fig.3). In einer weiteren Ausführungsform liegt der Sicherungsring 29 unmittelbar an dem als zweites Klemmlager 23 wirksamen Bügelabschnitt 28 an (Fig.4). Der Sicherungsring 29 kann auch unter Zwischenlage einer ringförmigen, den Führungskörper 25 radial umgebenden Abstandsscheibe 31 an dem Bügelabschnitt 28 (Fig.6) oder dem zweiten Klemmlager 23 anliegen. Die Abstandsscheibe 31 kann je nach erwünschter Vorspannung des Federelements 7 durch eine Abstandsscheibe 31 mit einer anderen Materialstärke ausgetauscht werden.

Beim Hindurchführen des Führungskörpers 25 durch die Aufnahmeöffnung 27 wird der Sicherungsring 29 radial nach innen in die Ringnut 30 gespreizt und nach dem Passieren der Aufnahmeöffnung 27 aufgrund seiner Federkraft automatisch nach außen in seine Ausgangslage zurückgespreizt. Der Sicherungsring 29 ermöglicht deshalb eine besonders einfache Montage und axiale Lagesicherung des Führungskörpers 25.

Die Übertragungseinrichtung 6 mit einem Ausgleichbügel 21 und einem daran fixierten, separaten zweiten Klemmlager 23 gemäß Fig.3 hat den montagetechnischen Vorteil, daß eine herkömmliche Feststellbremse mit geringem Aufwand mit der Schraubenfeder 8 und den Klemmlagern 22,23 nachgerüstet werden kann, ohne daß der Aufbau der herkömmlichen Feststellbremse wesentlich verändert werden muß.

Der Bügelabschnitt 28 selbst kann die Funktion des zweiten Klemmlagers 23 für das Federelement 7 übernehmen, wie dies beispielhaft anhand von Fig.4 und Fig.6 dargestellt ist.

Um die axiale Bewegungsführung des Führungskörpers 25 zu verbessern, trägt das zweite Klemmlager 23 bzw. der Bügelabschnitt 28 einen den Führungskörper 25 radial und mit Bewegungsspiel umgebenden Führungsansatz 50. Dieser Führungsansatz 50 hat die Form einer Hülse und kann zur Reibungsverminderung zwischen ihm und dem Führungskörper 25 mit einem geeigneten Werkstoff beschichtet sein. Der Führungsansatz 50 erstreckt sich in Richtung des ersten Klemmlagers 22. In Fig.4 ist der Führungsansatz 50 einstückiger Bestandteil des zweiten Klemmlagers 23. In einer weiteren, hier nicht dargestellten Ausführungsform ist er als separates Bauteil in geeigneter Weise mit dem zweiten Klemmlager 23 verbunden.

Um den als Hohlzylinder ausgebildeten Elastomerkörper 9 in seiner Umfangsrichtung am Ausgleichbügel 21 gleichmäßig abzustützen, hat letzterer - im Gegensatz zur Ausführungsform gemäß Fig.1 bis Fig.5 - einen im wesentlichen kreisförmigen Querschnitt (Fig.7, Fig.10, Fig.12). In Vorspannrichtung 24 zwischen dem Elastomerkörper 9 und dem ersten Klemmlager 22 ist eine im Querschnitt im wesentlichen kreisförmige Stützscheibe 32 angeordnet (Fig.6, Fig.8). Ihr radial äußerer Bereich ist zum Hindurchführen der Bremsseilzüge 13 von zwei gegenüberliegenden Durchgangsnuten 33 durchsetzt. Der Elastomerkörper 9 weist im Bereich der Durchgangsnuten 33 ebenfalls Aussparungen 34 auf, um die Bremsseilzüge 13 zwischen Stützscheibe 32 und Ausgleichbügel 21 behinderungsfrei führen zu können. Der Außendurchmesser der Stützscheibe 32 und die Durchgangsnuten 33 sind vorzugsweise derart dimensioniert, daß sich der Elastomerkörper 9 mit seiner Grundfläche vollständig an der Stützscheibe 32 abstützt. Dies gewährleistet eine kontrollierte Kompression des Elastomerkörpers 9 während des Betriebes. Die Stützscheibe 32 ist von einem zentralen Durchgangsloch 35 durchbrochen und weist einen derartigen Durchmesser auf, daß der Umfangsmantel 26 des Führungskörpers 25 bündig im Durchgangsloch 35 einliegt.

Der Ausgleichbügel 21 ist über das Federelement 7, über den Führungskörper 25 und über ein als Zugstange 36 ausgebildetes Kopplungsorgan mit dem Handbremshebel 4 beweglich bzw. gelenkig verbunden. In Ausgangsstellung des Handbremshebels 4 ist die Mittellängsachse 37 der Zugstange 36 etwa parallel zur Vorspannrichtung 24 angeordnet und das Federelement 7, die beiden Klemmlager 22,23, der Ausgleichbügel 21 sowie der Führungskörper 25 sind etwa konzentrisch zur Mittellängsachse 37 der Zugstange 36 angeordnet.

Das eine Längsende der Zugstange 36 ist über ein Schwenkgelenk 38 mit dem Hebelarm 11 des Handbremshebels 4 beweglich verbunden. Ein dem Hebelarm 11 abgewandter Abschnitt der Zugstange 36 trägt einen Lagervorsprung, der den Umfangsmantel der Zugstange 36 radial umgibt. Bei der Ausführungsform gemäß Fig.3 handelt es sich um einen in Richtung der Mittellängsachse 37 verstellbaren Lagervorsprung 39. Dieser verstellbare Lagervorsprung 39 ist über eine die Zugstange 36 mit Radialabstand umgebende Hülse 40 mit einer Verstellmutter 41 verbunden. Letztere wirkt mit einer Justiermutter 42 zusammen. Beide Muttern 41,42 korrespondieren mit einem Außengewinde 43 der Zugstange 36 und sind entlang der Mittellängsachse 37 des Außengewindes 43 verstellbar. Dieses Verstellen nimmt das Spiel aus den Bremsseilzügen 13 und kompensiert Verschleiß, Seillängungen etc..

Alternativ ist der Lagervorsprung ortsfest an der Zugstange 36 angeordnet. Dieser ortsfeste Lagervorsprung 44 ist in Richtung des Ausgleichbügels 21 von der Druckkraft einer Justierfeder 45 beaufschlagt. Gleichzeitig stützt sich die Justierfeder 45 an der Lagerplatte 14 ab. Die Justierfeder 45 ist anstelle der Muttern 41,42 als selbsttätige Seilzugverstellung wirksam.

Der Führungskärper 25 ist in Vorspannrichtung 24 von einem Hohlraum 46 zur Aufnahme eines Längsabschnittes der Zugstange 36 durchsetzt. Der Hohlraum 46 weist eine Querschnittsverjüngung auf, welche als zentrale Durchgangsöffnung 47 eines Lagersteges 48 ausgebildet ist. Der Lagersteg 48 ist an der Innenseite des Umfangsmantels 26 einstückig angeformt und verläuft etwa quer zur Mittellängsachse 37 der Zugstange 36. Im. Bereich der Durchgangsöffnung 47 ist die Zugstange 36 mit geringem Radialabstand vom Lagersteg 48 umgeben, um eine Schwenkbarkeit des Führungskörpers 25 gegenüber der Zugstange 36 zuzulassen. Der Durchmesser des Hohlraums 46 ist derart dimensioniert, daß genügend Kippfreiweg zur Zugstange 36 gewährleistet und damit im Betrieb ein ausreichender Längenausgleich der Bremsseilzüge 13 durch den Ausgleichbügel 21 gegeben ist. Die dem ersten Klemmlager 22 zugewandte Oberfläche des Lagersteges 48 ist von dem Lagervorsprung 39 bzw. 44 flankiert. Beim Verstellen des Handbremshebels 4 wird der Lagersteg 48 in Richtung des Ausgleichbügels 21 beaufschlagt. Somit ist die erforderliche bewegliche Kopplung zwischen Ausgleichbügel 21 und Zugstange 36 weiterhin gewährleistet. Sie ist konstruktiv einfach und raumsparend durch den Lagersteg 48 und den Lagervorsprung 39 bzw. 44 realisiert.

Wie aus Fig.3, Fig.4, Fig.6 und Fig.11 hervorgeht, kann der Lagersteg 48 in Ausgangsstellung der Feststellbremse 1 je nach Anwendungsfall und erforderlicher Kraftübertragung konstruktiv unterschiedlich ausgebildet und entlang der Mittellängsachse 37 unterschiedlich positioniert sein.

Die Arbeitsweise der in den Figuren dargestellten Feststellbremse 1 ist wie folgt: der ein vorgespanntes Federelement 7 in Form einer Druckfeder enthaltende Mechanismus überträgt die Zugkräfte zwischen Handbremshebel 4 und Radbremsen 2. Dieser Mechanismus ist derart aufgebaut, daß er bei Zugkräften in der Feststellbremse 1 auf Druck belastet wird. Der Mechanismus hält das Federelement 7 in einem vorgespannten Zustand und läßt bei Überschreiten der Vorspannkraft eine Kompression des Federelements 7 entsprechend seiner Federkennlinie zu. Dies entspricht einer elastischen Verlängerung der Bremsseilzüge 13 und begrenzt die maximal möglichen Bremskräfte. Der fahrzeugfeste Anschlag 12 und der Hebelarm 11 verhindern eine höhere Kraftübertragung auf die Zugstange 36, wodurch die maximal mögliche Bremskraft auf einen vorbestimmten Wert begrenzt wird.

**Patentansprüche**

1. Feststellbremse (1) für Kraftfahrzeuge, Fahrzeuganhänger od. dgl., mit einem Betätigungsorgan (4), dessen Verstellkraft durch eine Übertragungseinrichtung (6) als Spannkraft auf eine Spannvorrichtung einer Radbremse (2) übertragen wird, wobei

   - die Übertragungseinrichtung (6) mindestens ein Federelement (7) enthält und
   - das mindestens eine Federelement (7) und die Spannvorrichtung nach Art von hintereinandergeschalteten Federn einer Federschaltung beim Verstellen des Betätigungsorgans (4) zwischen demselben und der Radbremse (2) wirken,

   **dadurch gekennzeichnet,**
   daß das mindestens eine Federelement (6) in Ausgangsstellung des Betätigungsorgans (4) mechanisch vorgespannt ist.

2. Feststellbremse nach Anspruch 1,
   **dadurch gekennzeichnet,**

   - daß die Vorspannkraft ($P_v$) des mindestens einen Federelements (7) die Federkennlinie der Federschaltung in einen ersten Arbeitsbereich ($A_1$) mit Federkräften unterhalb der Vorspannkraft ($P_v$) und in einen zweiten Arbeitsbereich ($A_2$) mit Federkräften oberhalb der Vorspannkraft ($P_v$) einteilt und
   - daß der Verstellweg des Betätigungsorgans (4) durch Begrenzungsmittel (11,12) begrenzt ist, welche derart ausgelegt sind, daß sie den Federweg ($s_g$) des zweiten Arbeitsbereichs ($A_2$) begrenzen.

**3.** Feststellbremse nach Anspruch 2,
**dadurch gekennzeichnet,**
daß der Federweg ($s_g$) des zweiten Arbeitsbereichs ($A_2$) höchstens so groß ist wie der größtmögliche Federweg ($s_{max}$) des mindestens einen Federelements (7).

**4.** Feststellbremse nach einem der vorhergehenden Ansprüche,
**dadurch gekennzeichnet,**
daß das mindestens eine Federelement (7) eine Druckfeder (8,9) umfaßt.

**5.** Feststellbremse nach einem der vorhergehenden Ansprüche,
**dadurch gekennzeichnet,**
daß das mindestens eine Federelement (7) einen Elastomerkörper (9) umfaßt.

**6.** Feststellbremse nach einem der vorhergehenden Ansprüche,
**dadurch gekennzeichnet,**
daß die Übertragungseinrichtung (6) zwei miteinander korrespondierende, in Vorspannrichtung (24) des Federelements (7) relativbewegliche Klemmlager (22,23) aufweist, welche

- das Federelement (7) in Vorspannrichtung (24) zwischen sich klemmbackenartig fixieren,
- in Ausgangsstellung des Betätigungsorgans (4) einen vorbestimmten größten Abstand zwischen sich aufweisen und
- beim Verstellen des Betätigungsorgans (4) gegen den Federdruck des Federelements (7) beaufschlagbar sind.

**7.** Feststellbremse nach Anspruch 6,
**dadurch gekennzeichnet,**
daß ein Kopplungsorgan, insbesondere eine Zugstange (36), vorgesehen ist, welches

- einerseits mit dem Betätigungsorgan (4) gekoppelt ist und
- andererseits an das erste Klemmlager (22) derart angelenkt ist, daß das erste Klemmlager (22) von dem Betätigungsorgan (36) gegen den Federdruck in Richtung des zweiten Klemmlagers (23) beaufschlagbar ist.

**8.** Feststellbremse nach Anspruch 7,
**gekennzeichnet durch**
einen an das Kopplungsorgan (36) angelenkten Führungskörper (25), der

- mit dem ersten Klemmlager (22) fest verbunden ist und
- an dem zweiten Klemmlager (23) parallel zur Vorspannrichtung (24) beweglich gelagert ist.

**9.** Feststellbremse nach Anspruch 8,
**dadurch gekennzeichnet,**

- daß der Führungskörper (25) in Vorspannrichtung (24) von einem Hohlraum (46) zur Aufnahme eines Längsabschnitts des Kopplungsorgans (36) durchsetzt ist,
- daß der Hohlraum (46) eine Querschnittsverjüngung aufweist, in deren Bereich der Umfangsmantel des Kopplungsorgans (36) mit Bewegungsspiel tangiert ist, wobei die Querschnittsverjüngung als die Durchgangsöffnung (47) eines etwa quer zur Mittellängsachse (37) des Kopplungsorgans (36) verlaufenden Lagersteges (48) ausgebildet ist, dessen dem ersten Klemmlager (22) zugewandte Oberfläche einen am Umfangsmantel des Kopplungsorgans (36) angeordneten Lagervorsprung (39,44) zur Anlenkung flankiert.

**10.** Feststellbremse nach Anspruch 8 oder 9,
**dadurch gekennzeichnet,**
daß das zweite Klemmlager (23) in Vorspannrichtung (24) von einer Aufnahmeöffnung (27) zur Aufnahme, insbesondere etwa bündigen Aufnahme, des Führungskörpers (25) durchbrochen ist.

**11.** Feststellbremse nach einem der Ansprüche 6 bis 10,
**dadurch gekennzeichnet,**
daß die beiden Klemmlager (22,23) durch Sicherungsmittel an einer Bewegung über einen vorbestimmten größten Abstand zwischen sich hinaus gehindert sind.

**12.** Feststellbremse nach Anspruch 11,
**gekennzeichnet durch**
am Führungskörper angeordnete, quer zur Vorspannrichtung (24) verlaufende Sicherungsmittel, die auf der dem ersten Klemmlager (22) abgewandten Seite des zweiten Klemmlagers (23) angeordnet sind.

**13.** Feststellbremse nach Anspruch 12,
**dadurch gekennzeichnet,**

- daß die Sicherungsmittel einen federelastischen, spreizbaren Sicherungsring (29) umfaßen, welcher in einer quer zur Vorspannrichtung (24) verlaufenden Ringnut (30) des Führungskörpers (25) einliegt und
- daß die Ringnut (30) im Montagezustand des Führungskörpers (25) auf der dem ersten Klemmlager (22) abgewandten Seite des zweiten Klemmlagers (23) angeordnet ist.

**14.** Feststellbremse nach einem der vorhergehenden Ansprüche,

**dadurch gekennzeichnet,**
daß das Betätigungsorgan (4) über dasselbe Federelement (7) mit zwei Radbremsen (2) gekoppelt ist.

15. Feststellbremse nach Anspruch 14,
    **dadurch gekennzeichnet,**
    daß das Betätigungsorgan (4) über dasselbe Federelement (7) mit zwei Zugmitteln, insbesondere zwei Bremsseilzügen (13), für jeweils eine Radbremse (2) gekoppelt ist.

16. Feststellbremse nach Anspruch 15,
    **dadurch gekennzeichnet,**

    - daß die Zugmittel (13) in einem mit dem Betätigungsorgan (4) beweglich verbundenen Ausgleichbügel (21) verankert sind und
    - daß ein etwa quer zur Vorspannrichtung (24) verlaufender Bügelabschnitt (28) des Ausgleichbügels (21) das zweite Klemmlager (23) fixiert, insbesondere das zweite Klemmlager (23) als einstückigen Bestandteil umfaßt.

EP 0 972 690 A2

Fig. 1

Fig. 2

Fig. 3

Fig. 4

Fig. 5

Fig. 6

Fig. 7

Fig. 8

Fig. 10

Fig. 9

Fig. 11

Fig. 12